# NEUE EUROPÄISCHE PATENTSCHRIFT

(11) **EP 2 133 225 B2**
(45) Veröffentlichungstag und Bekanntmachung des Hinweises auf die Entscheidung über den Einspruch: **23.01.2019**
(45) Hinweis auf die Patenterteilung: 06.11.2013
(21) Anmeldenummer: 08290538.1
(22) Anmeldetag: 11.06.2008
(51) Int. Cl.: B60H 1/22

(54) **Vorrichtung zum elektrischen Zuheizen an einem Heizsystem eines Kraftfahrzeuges**
Device for electrical heating in a heating system of a motor vehicle
Dispositif destiné au chauffage électrique sur un système de chauffage d'un véhicule automobile

(43) Veröffentlichungstag der Anmeldung: 16.12.2009
(73) Patentinhaber: Mahle Behr France Rouffach S.A.S., 68250 Rouffach (FR)
(72) Erfinder: Mille, Bertrand, 68720 Illfurth (FR); de Guibert, Matthieu, 68250 Rouffach (FR)
(74) Vertreter: Grauel, Andreas

(56) Entgegenhaltungen:
- EP-A- 1 564 503
- EP-A- 1 621 826
- FR-A- 2 849 806

## Beschreibung

Die Erfindung betrifft eine Vorrichtung zum elektrischen Zuheizen an einem Heizsystem eines Kraftfahrzeuges, insbesondere einer Fahrgastzelle eines Kraftfahrzeuges, mit einem elektrischen Heizelement und mit einem Rahmen, in welchem das elektrische Heizelement anordenbar ist.

Gattungsgemäße Vorrichtungen zum elektrischen Zuheizen sind aus dem Stand der Technik gut bekannt. Insbesondere hinsichtlich verbrauchsoptimierter Kraftfahrzeuge werden Heizverfahren und Heizsysteme zum Heizen von Fahrgastzellen immer weiter entwickelt. Speziell verbrauchsoptimierte Kraftfahrzeuge erzeugen hierbei immer weniger Abwärme, welche für eine Erwärmung einer Fahrgastzelle eines Kraftfahrzeuges zur Verfügung steht. Dies macht sich besonders bei niedrigen Umgebungstemperaturen bzw. Außentemperaturen bemerkbar, so dass oftmals ein Zuheizen mit zumindest kurzzeitig eingesetzten zusätzlichen Zuheizvorrichtungen erforderlich ist, um einen gewünschten Klimakomfort in einer Fahrgastzelle schneller bereit stellen zu können. Vor allem während einer Warmlaufphase einer Brennkraftmaschine, in einem Schwachlastbetrieb der Brennkraftmaschine, beispielsweise im Stadtverkehr, oder in einem Leerlaufbetrieb der Brennkraftmaschine, kann ein Heizbedarf mit der Hauptheizung eines Heizsystems oftmals nicht mehr ausreichend abgedeckt werden. Um ein solches Heizdefizit vermeiden oder zumindest vermindern zu können, gibt es bereits verschiedene Möglichkeiten, die Hauptheizung mittels Zuheizvorrichtungen zu unterstützen, wie etwa mittels Brennstoffzuheizer, mittels elektrischer Zuheizer für Kühlmittel der Hauptheizung (kühlmitteiseitiger Zuheizer) oder für Lüftungsluft (luftseitiger Zuheizer) mittels Abgaswärmeübertrager usw. Durch derartige Zuheizvorrichtungen kann eine komfortable Innenraumtemperatur der Fahrgastzelle schneller erreicht werden. Die elektrische Zuheizung hinsichtlich einer Lüftungsluft erweist sich hierbei als die meist sinnvollste der genannten Möglichkeiten, da geeignete elektrisch betriebene Heizelemente, wie etwa PTC-Heizelemente, auch auf Grund ihrer geringen Größe unmittelbar in einem der Fahrgastzelle zugeführten Luftstrom angeordnet werden können, so dass sich die Luft sofort gut und spürbar erwärmen kann. Zudem ist eine Zuheizvorrichtung auf Basis von PTC-Heizelementen sehr Platz sparend und relativ kostengünstig realisierbar. Somit nimmt der Anteil an luftseitigen Zuheizern stetig zu. Da derartige PTC-Heizelemente gut bekannt sind, wird vorliegend auf deren Aufbau und Funktionsweise nicht weiter eingegangen.

Um solche elektrischen Heizelemente, insbesondere PTC-Heizelemente gut handbar in einem Heizsystem eines Kraftfahrzeuges integrieren zu können, sind sie meistens in Rahmen einer elektrischen Zuheizvorrichtung eingelegt. Die Rahmen können beispielsweise elektrische Anschlusseinrichtungen aufweisen, an welchen elektrische Zuleitungen vorteilhaft angeschlossen werden können, um eine Stromversorgung der elektrischen Heizelemente sicher zu stellen. Die elektrischen Zuheizvorrichtungen können mit diesem Rahmen in geeignete Aufnahmen des Heizsystems eingebaut werden, so dass sie sich leichter in das Heizungssystem einbauen lassen.

Die FR 2 849 806 offenbart einen einteilig ausgebildeten Rahmen für eine elektrische Zuheizvorrichtung.

Es ist Aufgabe vorliegender Erfindung, gattungsgemäße elektrische Vorrichtungen zum Zuheizen, insbesondere deren Rahmen, in welchen elektrische Heizelemente gehalten werden, konstruktiv weiter zu vereinfachen.

Die Aufgabe der Erfindung wird gemäß Anspruch 1 gelöst.

Vorteilhafter Weise baut die vorliegende elektrische Zuheizvorrichtung mit dem einteiligen Rahmen besonders einfach, so dass sie wesentlich einfacher und schneller zusammen gebaut werden kann.

Der Begriff Vorrichtung zum elektrischen Zuheizen", nachstehend auch kurz Zuheizvorrichtung genannt, beschreibt vorliegend jegliche Vorrichtung, mittels welcher es möglich ist, eine zusätzliche Heizquelle, je nach Anwendungsgebiet aber auch als ausschließliche Heizquelle einsetzbar, an einem Heizsystems zu schaffen. Wie eingangs bereits beschrieben, wird die Heizvorrichtung vorzugsweise im Zusammenhang mit einem Kraftfahrzeugheizungssystem verwendet. Aber auch andere Einsatzgebiete sind möglich. Eine Zuheizvorrichtung kann hierbei lediglich ein elektrisches Heizelement umfassen, wobei es sich oftmals jedoch so verhält, dass mehrere elektrische Heizeinrichtungen in einem Rahmen der elektrischen Zuheizvorrichtung angeordnet sind.

Mit dem Begriff "elektrische Heizelemente" wird vorliegend jegliche Einrichtung beschrieben, welche mittels Elektrizität zumindest erwärmt werden kann, so dass insbesondere Umgebungsluft hierüber erwärmbar ist. Es versteht sich, dass die elektrischen Heizelemente auch andere Medien erwärmen können, wenn dies in einem Heizsystem vorteilhaft ist.

Um beispielsweise maximal eine vorherbestimmte Heizleistung betriebssicher an einer Zuheizvorrichtung abgeben zu können, ist es erfindungsgemäß, wenn das elektrische Heizelement ein PTC-Heizelement umfasst. Hierbei spielt es nur eine untergeordnete Rolle, ob ein PTC-Heizelement mit einer Steuereinrichtung ausgestattet ist oder nicht, da der einteilige Rahmen problemlos an baulich unterschiedliche Anforderungen angepasst werden kann, wie nachstehend noch erläutert ist.

Mit der Bezeichnung "unmittelbar" ist beschrieben, dass das elektrische Heizelement von dem einteiligen Rahmen selbst gehalten wird, also ohne eine weitere Bauteileinheit der elektrischen Zuheizvorrichtung bzw. ohne weitere zusätzliche externe Befestigungsmittel.

Der Begriff "einteiliger Rahmen" erfasst nahezu alle einstückigen Gebilde, welche derart gestaltet sind, dass sie sich zum sicheren Aufnehmen und zum betriebssicheren Halten zumindest eines elektrischen Heizelementes eignen. Insofern zeichnet sich der einteilige Rahmen insbesondere dadurch aus, dass er montagefrei sofort nach seiner Herstelllung betriebs- bzw. einsatzbereit ist, beispielsweise unmittelbar nachdem er aus einem Kunststoffwerkstoff oder aus einem mehrkomponentigen Werkstoff hergestellt ist.

In einem sehr Flachen Aufbau kann der einteilige Rahmen als ein Gestell ausgebildet sein, in welchem ein elektrisches Heizelement eingelegt werden kann, wobei das elektrische Heizelement ohne weitere Hilfsmittel dauerhaft an dem Gestell befestigt ist. Darüber hinaus kann der einteilige Rahmen aber auch als ein Gehäuse ausgebildet sein, in welchem ein elektrisches Heizelement eingeschoben werden kann. Ein solches Gehäuse kann das elektrische Heizelement großflächiger umfassen.

Bei bisher bekannten gattungsgemäßen Zuheizvorrichtungen besteht ein Rahmen zum Aufnehmen elektrischer Heizelemente immer aus wenigstens einem zweiteiligen bzw. zweigeteilten Rahmen mit einer ersten Rahmenhälfte und einer zweiten Rahmenhälfte, wobei die beiden Rahmenhälften miteinander derart verbunden werden, dass sie in einer der Rahmenhälften eingelegte elektrische Heizelemente beidseits verklemmen, wodurch die elektrischen Heizelemente sicher an der Zuheizvorrichtung angeordnet sind.

Erfindungsgemäß wird auf eine derartige weitere Rahmenhälfte jedoch verzichtet, so dass die elektrische Zuheizvorrichtung mit einem nur einteiligen Rahmen besonders einfach baut.

Insofern wird die Aufgabe der Erfindung auch mit einem Rahmen einer elektrischen Vorrichtung zum Zuheizen an einem Heizsystem, insbesondere eines Kraftfahrzeuges, gelöst, wobei in dem Rahmen ein elektrisches Heizelement gehalten und wobei der Rahmen in einer Aufnahme des Heizsystems angeordnet werden kann, und wobei der Rahmen sich dadurch auszeichnet, das der Rahmen einteilig funktionsbereit ist. Der einteilige Rahmen ist gegenüber mehrteilig ausgebildeten Rahmen besonders kompakt bereit gestellt. Auf weitere Bauteile, wie bei einem herkömmlichen mehrteiligen Rahmen, kann vorliegend verzichtet werden. Insofern ist es vorliegend auch weiter nicht erforderlich, dass der Rahmen der Zuheizvorrichtung aufwendig zusammen gebaut werden muss.

Ein einteiliger Rahmen aus lediglich einer Rahmenhälfte ist auch wesentlich kostengünstiger herzustellen, da unter anderem auch nur ein Werkzeug für diese eine Rahmenhälfte bereit gestellt werden muss.

Im Hinblick hierauf ist auch ein Verfahren zum Herstellen eines Rahmens zum Aufnehmen eines elektrischen Heizelementes einer Vorrichtung zum Zuheizen an einem Heizsystem eines Kraftfahrzeuges vorteilhaft, bei welchem der Rahmen in einem Spritzgießwerkzeug gespritzt wird, und welches sich dadurch auszeichnet, dass der Rahmen einteilig gespritzt wird. Hierdurch können nicht nur Herstellungskosten reduziert werden, sondern auch Kosten hinsichtlich der nachgeschalteten Logistik können vorteilhafter Weise reduziert werden, da lediglich ein Rahmenteil für vorliegende elektrische Zuheizvorrichtung gehandhabt werden muss.

Vorteilhafter Weise wird der Rahmen der elektrischen Heizvorrichtung mit einem einzigen Spritzgießwerkzeug gespritzt. Insofern vereinfacht sich die Herstellung des Rahmens der elektrischen Heizvorrichtung wesentlich.

Ein Spritzgießwerkzeug kann vorliegend zudem auf unterschiedlich gestaltete Rahmen eingestellt werden, wenn in das Spritzgießwerkzeug ein Formkern eingelegt wird, welcher in Abhängigkeit der Gestalt des einteiligen Rahmens ausgewählt wird. Somit können mit nur einem Spritzgießwerkzeug eine Vielzahl an unterschiedlichen Rahmen für verschieden aufgebaute elektrische Zuheizvorrichtungen erzeugt bzw. hergestellt werden.

Erfindungsgemäß ist vorgesehen, dass das elektrische Heizelement formschlüssig an dem einteiligen Rahmen gehalten und befestigt ist. Mittels eines geeigneten Formschlusses kann das elektrische Heizelement dauerhaft betriebssicher an dem einteiligen Rahmen befestigt werden

Erfindungsgemäß kann eine Formschlussverbindung realisiert werden, wenn Mittel zum Halten des elektrischen Heizelementes vorgesehen sind, welche einstückig mit dem einteiligen Rahmen ausgebildet sind.

In diesem Zusammenhang ist es erfindungsgemäß, wenn die Mittel zum Halten des elektrischen Heizelementes von dem einteiligen Rahmen ausgebildet sind. Hierdurch kann der einteilige Rahmen von sich aus das elektrische Heizelement sicher halten.

Der einteilige Rahmen mit den Mitteln zum Halten kann vielfältig hergestellt werden. Sind die Mittel zum Halten des elektrischen Heizelementes an dem einteiligen Rahmen angespritzt, kann der Rahmen sehr kostengünstig produziert werden.

Einen ausreichend guten Halt erfährt das elektrische Heizelement an dem Rahmen bereits wenn die Mittel zum Halten des elektrischen Heizelementes beabstandet voneinander an dem einteiligen Rahmen positioniert sind.

So sieht eine weitere bevorzugte Ausführungsvariante auch vor, dass der einteilige Rahmen das elektrische Heizelement punktuell unmittelbar klemmt. Durch eine nur punktuelle Klemmung des elektrischen Heizelementes an dem einteiligen Rahmen, kann gewährleistet werden, dass der einteilige Rahmen besonders leicht bauen kann, da er nur mit einigen wenigen Mitteln zum Halten ausgestattet werden braucht, wodurch weniger Material an dem einteiligen Rahmen verbaut werden kann.

Die vorstehend beschriebenen Mittel zum Halten können an dem einteiligen Rahmen in unterschiedlicher Gestalt umgesetzt werden. Die Erfindung sieht vor, dass der einteilige Rahmen Rastelemente umfasst, an welche das elektrische Heizelement formschlüssig eingerastet ist. Vorteilhafter Weise umfassen die Rastelemente hierbei Rastnasen, welche einen Rand des elektrischen Heizelementes umgreifen können, sobald das elektrische Heizelement ordnungsgemäß in den einteiligen Rahmen eingelegt ist.

Vorteilhafter Weise sind die Rastelemente einstückig mit dem einteiligen Rahmen ausgebildet. Hierdurch kann eine Montage von Rastelementen an dem einteiligen Rahmen vermieden werden.

Weitere Vorteile, Ziele und Eigenschaften vorliegender Erfindung werden anhand nachfolgender Beschreibung anliegender Zeichnung erläutert, in welcher beispielhaft Vorrichtungen zum Zuheizen hinsichtlich eines Kraftfahrzeugheizsystems, insbesondere einteilige Rahmen der Zuheizvorrichtungen, dargestellt sind. Komponenten der Zuheizvorrichtungen, welche in den Figuren wenigstens im Wesentlichen hinsichtlich ihrer Funktion übereinstimmen, können hierbei mit gleichen Bezugsziffern gekennzeichnet sein, wobei diese Komponenten nicht in allen Figuren beziffert und erläutert sein müssen.

### Es zeigt

- Figur 1: schematisch eine Ansicht einer ersten erfindungsgemäßen Vorrichtung zum Zuheizen mit einem einteiligen Rahmen, in welchem ein PTC-Heizelement eingeklipst ist, wobei das PTC-Heizelement unmittelbar von dem einteiligen Rahmen gehalten wird,
- Figur 2: schematisch eine Ansicht des Rahmens der ersten Zuheizvorrichtung ohne eingelegtes PTC-Heizelement,
- Figur 3: schematisch eine Detailansicht eines einzelnen Rastelementes des Rahmens mit einer Rastnase aus den Figuren 1 und 2,
- Figur 4: schematisch einen Querschnitt der ersten Zuheizvorrichtung in Höhe zweier Rastelemente, die gegenüber liegend an dem Rahmen angespritzt sind,
- Figur 5: schematisch eine erste Montageansicht der ersten Zuheizvorrichtung,
- Figur 6: schematisch eine weitere Montageansicht der ersten Zuheizvorrichtung,
- Figur 7: schematisch eine Ansicht einer nicht erfindungsgemäßen Vorrichtung zum Zuheizen mit einem einteiligen Rahmen, in welchem zwei alternative PTC-Heizelemente eingeschoben werden,
- Figur 8: schematisch eine Ansicht der nicht erfindungsgemäßen Zuheizvorrichtung mit dem einteiligen Rahmen, in welchem die PTC-Heizelement eingeklipst sind,
- Figur 9: schematisch eine Komplettansicht der nicht erfindungsgemäßen Zuheizvorrichtung mit angebauter Steuereinrichtung der PTC-Heizelemente,
- Figur 10: schematisch eine Ansicht eines anderen einteiligen Rahmens mit zusätzlichen Gitterbereichen einer nicht erfindungsgemäßen Vorrichtung zum Zuheizen,
- Figur 11: schematisch eine Ansicht des einteiligen Rahmens aus der Figur 10 mit teilweise eingeschobenen PTC-Heizelementen,
- Figur 12: schematisch eine weitere Ansicht der nun montierten Zuheizvorrichtung mit dem einteiligen Rahmen aus den Figuren 10 und 11,
- Figur 13: schematisch eine Ansicht eines ersten Werkzeugteils eines Spritzgießwerkzeuges zum Spritzgießen eines einteiligen Rahmens einer elektrischen Zuheizvorrichtung,
- Figur 14: schematisch eine Ansicht des ersten Werkzeugteils des Spritzgießwerkzeuges aus der Figur 13 mit einem Formkern als zweites Werkzeugteil,
- Figur 15: schematisch eine Ansicht eines einteiligen Rahmens einer Vorrichtung zum Zuheizen, welches mit dem Spritzgießwerkzeug aus den Figuren 13 und 14 gespritzt wurde, und
- Figur 16: schematisch eine weitere Ansicht des einteiligen Rahmens aus der Figur 15 im Zusammenhang mit einer Steuereinrichtung für PTC-Heizelemente.

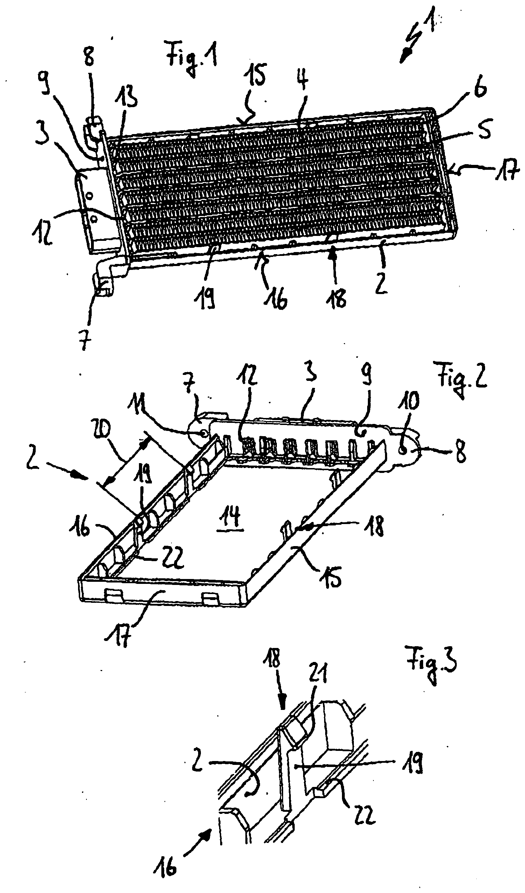

Die in den Figuren 1 bis 6 in verschiedenen Darstellungen gezeigte erfindungsgemäßen Vorrichtung 1 zum Zuheizen in einem Heizsystem (hier nicht gezeigt) eines Kraftfahrzeuges kann beispielsweise in eine Aufnahme einer Klimaanlage des genannten Heizsystems eingeschoben werden, um eine reguläre Heizung des Heizsystems unterstützen zu können.

Die Zuheizvorrichtung 1 besteht im Wesentlichen aus einem einteiligen Rahmen 2 (siehe insbesondere auch Figur 2) mit einer kopfseitig angeordneten elektrischen Anschlusseinrichtung 3 und aus einem elektrischen PTC-Heizelement 4 mit Heizstäben 5 und Heizrippen 6, wobei das PTC-Heizelement 4 in dem einteiligen Rahmen 2 eingelegt ist.

Radial neben der elektrischen Anschlusseinrichtung 3 sind ein erster Haltearm 7 und ein zweiter Haltearm 8 eines Rahmenkragens 9 angeordnet, mittels welchen die Zuheizvorrichtung 1 an einer Aufnahme eines Heizsystems befestigt werden kann. Beispielsweise kann eine solche Befestigung mittels Schraubverbindungen erzielt werden, wobei entsprechende Schrauben (hier nicht gezeigt) durch Durchgangslöcher 10 bzw. 11 der Haltearme 7 bzw. 8 hindurch geführt sein können.

Um eine elektrische Verbindung zwischen elektrischen Anschlusskontakten 12 der elektrischen Anschlusseinrichtung 3 und elektrischen Kontakten 13 des elektrischen Heizelementes 4 herstellen zu können, sind die elektrischen Anschlusskontakte 12 der elektrischen Anschlusseinrichtung 3 in einen Einlegeraum 14 des einteiligen Rahmens 2 gerichtet.

Der Einlegeraum 14 des einteiligen Rahmens 2 ist kopfseitig von dem Rahmenkragen 9, seitlich von Rahmenflanken 15 und 16 und bodenseitig von einem Rahmenboden 17 umgrenzt.

Um das elektrische Heizelement 4 dauerhaft und betriebssicher an dem einteiligen Rahmen 2 befestigen und damit auch an der Zuheizvorrichtung 1 halten zu können, umfasst der einteilige Rahmen 2 Haltemittel 18 (siehe insbesondere Figur 3), welche einstückig mit dem einteiligen Rahmen 2 ausgebildet sind. Mittels der Haltemittel 18 kann das elektrische Heizelement 4 formschlüssig an dem einteiligen Rahmen 2 gehalten und befestigt werden.

Die Haltemittel 18 sind in diesem Ausführungsbeispiel als Rastelemente 19 (hier nur exemplarisch beziffert) realisiert, welche zudem an jeder Rahmenseite mit einem Abstand 20 voneinander beabstandet an dem einteiligen Rahmen 2 angespritzt sind. Somit kann der einteilige Rahmen 2 das elektrische Heizelement 4 punktuell unmittelbar selbst klemmen.

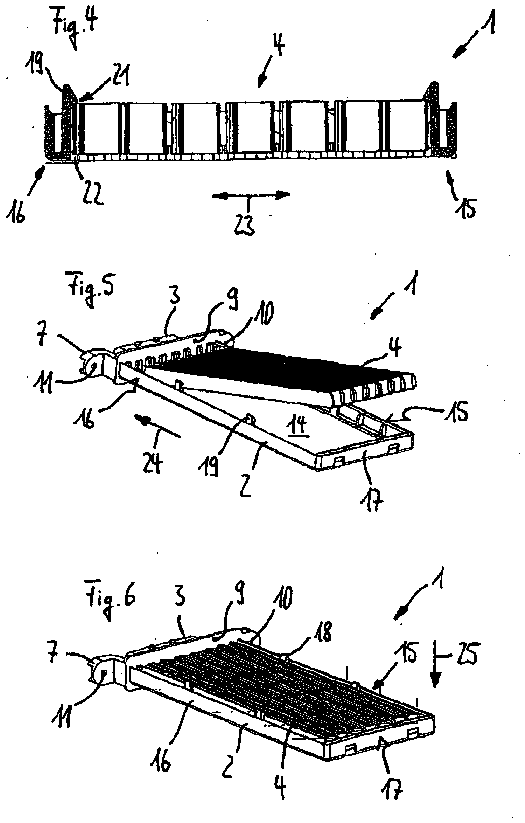

Jedes der Rastelemente 19 weist eine Rastnase 21 (siehe insbesondere Figuren 3 und 4) auf, welche über das sonstige Rastelement 19 in den Einlegeraum 14 hervor steht.

Mittels der Rastelemente 19 und insbesondere mittels der Rastnasen 21 kann das elektrische Heizelement 4 gegen eine Auflagekante 22 des einteiligen Rahmens 2 dauerhaft gedrückt werden, insofern ist das elektrische Heizelement 4 sicher zwischen den Rastnasen 21 und der Auflagekante 22 eingeklemmt. Hierbei ragen die Rastnasen 21 und die Auflagekante 22 derart weit in den Einlegeraum 14 hinein, dass selbst eine Radialbewegung 23 des elektrischen Heizelementes 4 keine Gefahr für ein unbeabsichtigtes Lösen des elektrischen Heizelementes 4 aus dem Einlegeraum 14 des einteiligen Rahmens 2 bedeutet.

Beim Zusammenbau der Zuheizvorrichtung 1 wird das elektrische Heizelement 4 mit seinen elektrischen Kontakten 13 voran mit den elektrischen Anschlusskontakten 12 des einteiligen Rahmens 2 in Kontakt gebracht sowie mit einer Axialbewegung 24 axial in Richtung des Rahmenkragens 9 geschoben (siehe Figur 5), um anschließend mit einer Abwärtsbewegung 25 vollständig in den einteiligen Rahmen 2 eingeklipst zu werden (siehe Figur 6). Mit diesem Einklipsen ist das elektrische Heizelement 4 in dem einteiligen Rahmen 2 fertig eingelegt und fest aber lösbar mit dem einteiligen Rahmen 2 verbunden, so dass die Zuheizvorrichtung 1 hinsichtlich einer Montage des elektrischen Heizelementes 4 und dem Rahmen 2 bereits funktions- und betriebsbereit wird. Vorteilhafter Weise sind weitere Befestigungsmaßnahmen des elektrischen Heizelementes an dem einteiligen Rahmen nicht erforderlich. Insbesondere wird keine weitere separate Rahmenhälfte zum Befestigen des elektrischen Heizelementes 4 benötigt, wie es im Stand der Technik hinsichtlich elektrischer Zuheizvorrichtungen bisher erforderlich ist.

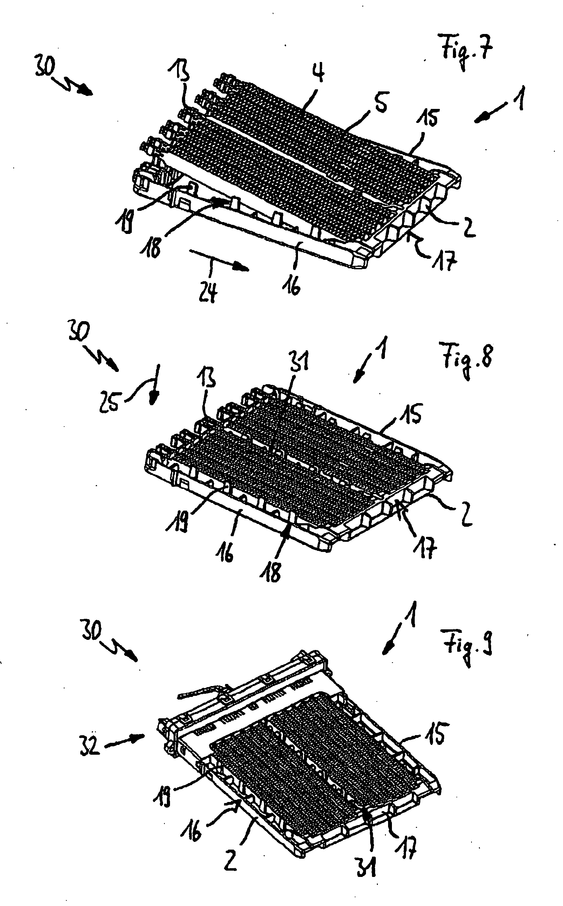

Bei dem in den Figuren 7 bis 9 gezeigten nicht erfindungsgemäßen Beispiel 30 sind alternative elektrische Heizelemente 4 (hier nur exemplarisch beziffert) in einem einteiligen Rahmen 2 eingelegt und mittels Haltemittel 18 in Gestalt von mit dem einteiligen Rahmen 2 ausgebildeten Rastelementen 19 in einem Einlegeraum 14 des einteiligen Rahmens 2 formschlüssig befestigt. Insgesamt sind an jeder Rahmenflanke 15 bzw. 16 jeweils vier solcher Rastelemente 19 vorgesehen. Weitere Rastelemente 19 sind an einem mittig angeordneten Mittelsteg 31 des einteiligen Rahmens 2 einstückig an dem einteiligen Rahmen 2 angespritzt, so dass jedes der elektrischen Heizelemente 4 beidseits mittels jeweils vier Rastelemente 19 des einteiligen Rahmens 2 gehalten werden kann.

Gemäß der Darstellung nach der Figur 7 werden die elektrischen Heizelemente 4 mit einer Axialbewegung24 in Richtung eines Rahmenbodens 17 bewegt. Anschließend werden die elektrischen Heizelemente 4 mit einer Abwärtsbewegung 25 (siehe Figur 8) formschlüssig in den einteiligen Rahmen 2 eingerastet, so dass jeweils eine feste Rastverbindung zwischen den elektrischen Heizelementen 4 und dem einteiligen Rahmen 2 ohne weitere Befestigungsmittel hergestellt ist.

Nach der Darstellung der Figur 9 ist an dem einteiligen Rahmen 2 kopfseitig noch eine Steuereinrichtung 32 aufgesteckt. Mittels der Steuereinrichtung 32 können einzelne Heizstäbe 5 der elektrischen Heizelemente 4 einerseits mit Elektrizität versorgt und andererseits hinsichtlich ihrer Heizleistung gesteuert werden. Da derartige Steuereinrichtungen 32 an elektrischen Zuheizvorrichtungen 1 nicht unüblich sind, wird vorliegend auf eine weiterführende Funktionsbeschreibung verzichtet.

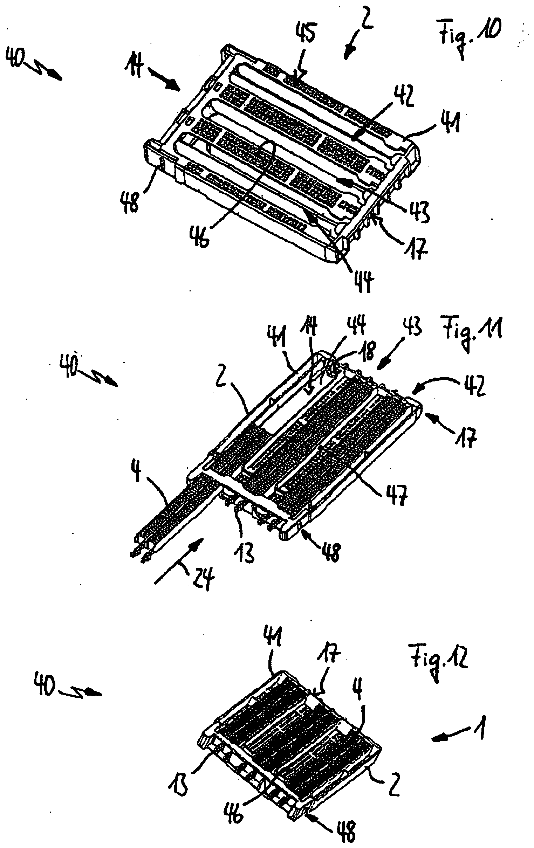

Bei einem anderen nicht erfindungsgemäßen Beispiel 40 einer erfindungsgemäßen Zuheizvorrichtung 1 (siehe beispielsweise Figur 12) ist ein einteiliger Rahmen 2 als ein einteiliges Gehäuse 41 mit insgesamt drei Einsteckplätzen 42, 43 und 44 für PTC-Heizelemente 4 (hier auch nur exemplarisch beziffert) ausgebildet.

Der einteilige Rahmen 41 ist nach der Darstellung der Figur 10 in einer Aufsicht auf seine Unterseite 45 dargestellt, an welcher Gitterstrukturen 46 (hier auch nur exemplarisch beziffert) zwischen den einzelnen Einsteckplätzen 42, 43 und 44 vorgesehen sind. Oberhalb und seitlich der Gitterstrukturen 46 sind noch Einführrippen 47 vorgesehen, die ein Einstecken der einzelnen PTC-Heizelemente 4 in einem Einlegeraum 14 gemäß einer Axialbewegung 24 vereinfachen können.

Im Bereich des Rahmenbodens 17 des einteiligen Rahmens 2 sind an dem Einlegeraum 14 Haltemittel 18 als Rastelemente vorgesehen, in welche jeweils jedes der PTC-Heizelemente 4 einrasten kann.

Kopfseitig der Zuheizvorrichtung 1, also im Bereich elektrischer Kontakte 13 der PTC-Heizelemente 4, kann eine Steuereinrichtung (hier nicht gezeigt) auf die Zuheizvorrichtung 1 aufgesteckt werden. Diese Steuereinrichtung kann an seitlichen Außenerhebungen 48 (hier nur exemplarisch beziffert) fixiert werden.

Alle einteiligen Rahmen 2 der vorstehend erläuterten Ausführungsbeispiele sind einstückig hergestellt. Auch die beschriebenen Haltemittel 18 bzw. Rastelemente 19 sind einstückig mit den einteiligen Rahmen 2 ausgebildet, so dass die einteiligen Rahmen 2 einen besonders einfachen Aufbau der jeweiligen elektrischen Zuheizvorrichtung 1 ermöglichen.

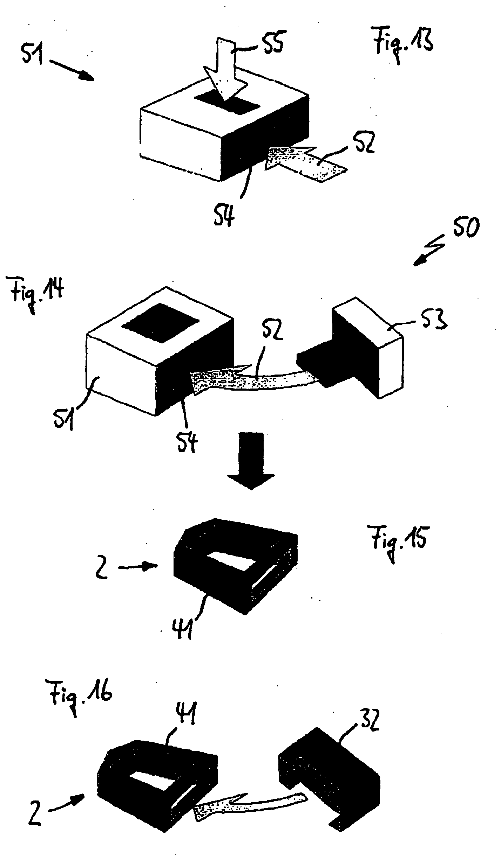

Es versteht sich, dass die einteiligen Rahmen 2 mit unterschiedlichen Herstellverfahren hergestellt werden können. Beispielhaft ist in den Figuren 13 und 14 ein Spritzgießwerkzeug 50 dargestellt, mittels welchem selbst unterschiedlich gestaltete einteilige Rahmen 2 gespritzt werden können.

Das Spritzgießwerkzeug 50 weist ein Grundwerkzeugteil 51 auf, in welches gemäß erster Einsetzrichtungen 52 ein Formkern 53 in ein Werkzeugfach 54 eingesetzt werden kann. Demzufolge ist das Spritzgießwerkzeug 50 mehrteilig, zumindest jedoch zweiteilig ausgebildet. Gemäß der weiteren Einsetzrichtung 55 können weitere Einsatzteile (hier nicht gezeigt), wie Schieber oder dergleichen, in das Grundwerkzeugteil 51 eingesetzt werden. Insofern können einteilige Rahmen 2 unterschiedlichster Gestalt mit dem vorliegenden Spritzgießwerkzeug 50 gespritzt werden.

Beispielhaft ist in den Figuren 15 und 16 ein mit dem Spritzgießwerkzeug 50 gespritzter einteiliger Rahmen 2 in Gestalt eines weiteren einteiligen Gehäuses 41 gezeigt, an welchem neben elektrischen Heizelementen (hier nicht gezeigt) zudem eine Steuereinrichtung 32 befestigt werden kann. Vorteilhafter Weise kann die Steuereinrichtung 32 das einteilige Gehäuse 41 zugleich kopfseitig luftdicht abschließen.

### Bezugsziffernliste

- 1: Vorrichtung zum elektrischen Zuheizen
- 2: einteiliger Rahmen
- 3: elektrische Anschlusseinrichtung
- 4: elekrisches Heizelement
- 5: Heizstäbe
- 6: Heizrippen
- 7: erster Haltearm
- 8: zweiter Haltearm
- 9: Rahmenkragen
- 10: erstes Durchgangsloch
- 11: zweites Durchgangsloch
- 12: elektrische Anschlusskontakte
- 13: elektrische Kontakte
- 14: Einlegeraum
- 15: erste Rahmenflanke
- 16: zweite Rahmenflanke
- 17: Rahmenboden
- 18: Haltemittel
- 19: Rastelemente
- 20: Abstand
- 21: Rastnasen
- 22: Auflagekante
- 23: Radialbewegung
- 24: Axialbewegung
- 25: Abwärtsbewegung
- 30: weiteres Ausführungsbeispiel
- 31: Mittelsteg
- 40: anderes Ausführungsbeispiel
- 41: einteiliges Gehäuse
- 42: erster Einsteckplatz
- 43: zweiter Einsteckplatz
- 44: dritter Einsteckplatz
- 45: Unterseite
- 46: Gitterstrukturen
- 47: Einführrippen
- 48: seitliche Außenerhebungen
- 50: Spritzgießwerkzeug
- 51: Grundwerkzeugteil
- 52: erste Einsetzrichtungen
- 53: Formkern
- 54: Werkzeugfach
- 55: weitere Einsetzrichtung

## Patentansprüche

1. Vorrichtung (1) zum elektrischen Zuheizen an einem Heizsystem eines Kraftfahrzeuges, insbesondere einer Fahrgastzelle eines Kraftfahrzeuges, mit einem elektrischen Heizelement (4) und mit einem Rahmen (2), wobei der Rahmen einen Einlegeraum aufweist, in welchem das elektrische Heizelement (4) anordenbar ist, wobei der Rahmen (2), an welchem das elektrische Heizelement (4) unmittelbar befestigt ist, einteilig ausgebildet ist, **dadurch gekennzeichnet, dass** der einteilige Rahmen (2) Rastelemente (19) umfasst, an welche das elektrische Heizelement (4) formschlüssig eingerastet ist, wobei die Zuheizvorrichtung aus einem elektrischen PTC-Heizelement (4) mit Heizstäben und Heizrippen (6) besteht und der Rahmen (2) mit einer kopfseitig angeordneten elektrischen Anschlusseinrichtung (3) versehen ist, wobei die elektrische Anschlusseinrichtung (3) elektrische Anschlusskontakte (12) aufweist, welche in einen Einlegeraum (14) gerichtet sind, um eine elektrische Verbindung zwischen den elektrischen Anschlusskontakten (12) der elektrischen Anschlusseinrichtung und elektrischen Kontakten des elektrischen Heizelementes (4) herzustellen, wobei der Einlegeraum (14) des einteiligen Rahmens (2) kopfseitig von einem Rahmenkragen (9), seitlich von Rahmenflanken (15, 16) und bodenseitig von einem Rahmenboden (17), umgrenzt ist.

2. Zuheizvorrichtung (1) nach Anspruch 1, **dadurch gekennzeichnet, dass** das elektrische Heizelement (4) formschlüssig an dem einteiligen Rahmen (2) gehalten und befestigt ist.

3. Zuheizvorrichtung (1) nach Anspruch 1 oder 2, **gekennzeichnet durch** Mittel (18) zum Halten des elektrischen Heizelementes (4), welche einstückig mit dem einteiligen Rahmen (2) ausgebildet sind.

4. Zuheizvorrichtung (1) nach Anspruch 3, **dadurch gekennzeichnet, dass** die Mittel (18) zum Halten des elektrischen Heizelementes (4) von dem einteiligen Rahmen (2) ausgebildet sind.

5. Zuheizvorrichtung (1) nach einem der Ansprüche 3 oder 4, **dadurch gekennzeichnet, dass** die Mittel (18) zum Halten des elektrischen Heizelementes (4) an dem einteiligen Rahmen (2) angespritzt sind.

6. Zuheizvorrichtung (1) nach einem der Ansprüche 3 bis 5, **dadurch gekennzeichnet, dass** die Mittel (18) zum Halten des elektrischen Heizelementes (4) beabstandet voneinander an dem einteiligen Rahmen (2) positioniert sind.

7. Zuheizvorrichtung (1) nach einem der vorhergehenden Ansprüche, **dadurch gekennzeichnet, dass** der einteilige Rahmen (2) das elektrische Heizelement (4) punktuell unmittelbar klemmt.

## Claims

1. A device (1) for supplementary electrical heating in a heating system of a motor vehicle, in particular of a passenger compartment of a motor vehicle, with an electric heating element (4) and with a frame (2), wherein the frame has an insertion space in which the electric heating element (4) can be arranged, wherein the frame (2), to which the electric heating element (4) is directly fastened, is formed as one piece, **characterized in that** the one-piece frame (2) comprises detent elements (19) on which the electric heating element (4) is positively engaged, wherein the supplementary heating device consists of an electric PTC heating element (4) with heating rods and heating ribs (6) and the frame (2) is provided with an electric connecting device (3) arranged on the head end, wherein the electric connecting device (3) has electric connecting contacts (12) which are directed into an insertion space (14) in order to create an electric connection between the electric connecting contacts (12) of the electric connecting device and electric contacts of the electric heating element (4), wherein the insertion space (14) of the one-piece frame (2) is bounded by a frame collar (9) on the head end, by frame flanks (15, 16) on the sides and by a frame bottom (17) on the bottom.

2. The supplementary heating device (1) according to claim 1, **characterized in that** the electric heating element (4) is positively held and fastened on the one-piece frame (2).

3. The supplementary heating device (1) according to claim 1 or 2, **characterized by** means (18) for holding the electric heating element (4), which are formed integral with the one-piece frame (2).

4. The supplementary heating device (1) according to claim 3, **characterized in that** the means (18) for holding the electric heating element (4) are formed by the one-piece frame (2).

5. The supplementary heating device (1) according to one of claims 3 or 4, **characterized in that** the means (18) for holding the electric heating element (4) are molded onto the one-piece frame (2).

6. The supplementary heating device (1) according to one of claims 3 to 5, **characterized in that** the means (18) for holding the electric heating element (4) are positioned at a distance from each other on the one-piece frame (2).

7. The supplementary heating device (1) according to one of the preceding claims, **characterized in that** the one-piece frame (2) directly clamps the electric heating element (4) at certain points.

## Revendications

1. Dispositif (1) pour le chauffage d'appoint électrique ajouté à un système de chauffage d'un véhicule automobile, en particulier d'un habitacle d'un véhicule automobile, ledit dispositif comprenant un élément chauffant électrique (4) et un cadre (2), où le cadre présente un espace d'insertion dans lequel peut être disposé l'élément chauffant électrique (4), où le cadre (2), sur lequel est fixé directement l'élément chauffant électrique (4), est configuré de façon monobloc, **caractérisé en ce que** le cadre monobloc (2) comprend des éléments d'encliquetage (19) sur lesquels l'élément chauffant électrique (4) est encliqueté par complémentarité de forme, où le dispositif de chauffage d'appoint se compose d'un élément chauffant électrique (4) à coefficient de température positif - CTP - comprenant des cartouches chauffantes et des ailettes de chauffage (6), et le cadre (2) est doté d'un dispositif de raccordement électrique (3) disposé côté tête, où le dispositif de raccordement électrique (3) présente des contacts électriques (12) de raccordement, contacts qui sont dirigés dans un espace d'insertion (14), pour établir une liaison électrique entre les contacts électriques (12) de raccordement du dispositif de raccordement électrique, et des contacts électriques de l'élément chauffant électrique (4), où l'espace d'insertion (14) du cadre monobloc (2) est délimité, côté tête, par une collerette (9) du cadre, latéralement par des flancs (15, 16) du cadre et, côté fond, par un fond (17) du cadre.

2. Dispositif de chauffage d'appoint (1) selon la revendication 1, **caractérisé en ce que** l'élément chauffant électrique (4) est maintenu et fixé sur le cadre monobloc (2), par complémentarité de forme.

3. Dispositif de chauffage d'appoint (1) selon la revendication 1 ou 2, **caractérisé par** des moyens (18) servant au maintien de l'élément chauffant électrique (4), lesquels moyens sont configurés en formant une seule et même pièce avec le cadre monobloc (2).

4. Dispositif de chauffage d'appoint (1) selon la revendication 3, **caractérisé en ce que** les moyens (18) servant au maintien de l'élément chauffant électrique (4) sont formés par le cadre monobloc (2).

5. Dispositif de chauffage d'appoint (1) selon l'une des revendications 3 ou 4, **caractérisé en ce que** les moyens (18) servant au maintien de l'élément chauffant électrique (4) sont moulés par injection sur le cadre monobloc (2).

6. Dispositif de chauffage d'appoint (1) selon l'une quelconque des revendications 3 à 5, **caractérisé en ce que** les moyens (18) servant au maintien de l'élément chauffant électrique (4) sont positionnés sur le cadre monobloc (2) en étant espacés les uns des autres.

7. Dispositif de chauffage d'appoint (1) selon l'une quelconque des revendications précédentes, **caractérisé en ce que** le cadre monobloc (2) bloque directement, de façon ponctuelle, l'élément chauffant électrique (4).
